# EUROPEAN PATENT APPLICATION

(11) **EP 4 529 253 A1**
(43) Date of publication of application: **26.03.2025**
(21) Application number: 23198919.5
(22) Date of filing: 21.09.2023
(51) Int. Cl.: H04W 16/10, H04W 16/14, H04W 88/06

(54) **RADIO NODE AND RADIO SYSTEM FOR RADIO COMMUNICATION AND METHOD OF EXCHANGING INFORMATION ABOUT ABNORMALITIES IN A FREQUENCY SPECTRUM**

(71) Applicant: Rohde & Schwarz GmbH & Co. KG, 81671 München (DE)
(72) Inventor: Rautenberg, Mathias, 81671 München (DE); Juenger, Niklas, 81671 München (DE)
(74) Representative: Prinz & Partner mbB

(57) **Abstract**

The invention relates to a radio node (10, 30) for radio communication, wherein the radio node (10, 30) comprises a first radio (14, 34) and a second radio (16, 36). The radio node (10, 30) comprises a first radio sensing module (18, 38) and a second radio sensing module (20, 40). The radio node (10, 30) comprises a common spectrum management module (22, 42) that is configured to interact with the first radio sensing module (18, 38) and the second radio sensing module (20, 40) so as to obtain sensing data from the first radio sensing module (18, 38) and the second radio sensing module (20, 40). The common spectrum management module (22, 42) is configured to process the sensing data obtained and to identify at least one abnormality within the sensing data. The common spectrum management module (22, 42) is configured to control the first radio (14, 34), in case of an abnormality identified, to transmit an information message that comprises information about the abnormality identified. Further, the invention relates to a radio system (28) and a method of exchanging information about abnormalities in a frequency spectrum.

## Description

The invention relates to a radio node for radio communication. Further, the invention relates to a radio system for radio communication. In addition, the invention relates to a method of exchanging information about abnormalities in a frequency spectrum.

In the state of the art, radio systems are known that comprise several radio nodes that communicate with each other via radio frequency. These radio nodes may relate to mobile radios like handheld radios or stationary radios. For instance, the radios may relate to software-defined radios (SDR).

Depending on the respective application scenario, a hierarchy may be established between the participants of the radio system. Hence, the radio nodes may be grouped so as to establish different radio groups. The radio groups may be assigned to certain frequency bands such that each radio node of the same radio group uses the same frequency band for radio communication, thereby ensuring that the respective radio nodes may communicate with each other. In order to ensure that the several radio nodes of the different radio groups do not disturb each other, different frequency bands are associated with the respective radio groups.

In addition to internal disturbance occurring from (wanted) radio communication, external disturbance may also occur, for instance interfering signals. The interfering signals may originate from signal interferer or other sources in an electromagnetically disturbed environment.

To deal with these disturbances, it is known to use a frequency hopset, namely different frequencies used in time. In fact, a frequency hopset is inter alia used by Frequency-hopping spread spectrum (FHSS) which is a method of transmitting radio signals by rapidly changing the carrier frequency among many frequencies occupying a large spectral band. Due to the rapidly changing carrier frequency, it is a complex task to actively disturb the radio communication by means of a signal interferer. The respective frequency hopset is pre-defined, namely the different frequencies used for radio communication, thereby ensuring that all radio nodes know the frequencies to be used beforehand.

Even though the frequency hopset is used, disturbance of the radio communication may still occur due to the electromagnetically disturbed environment such that the transmission capacity is lowered, causing the data rate of the radio communication to be limited.

Accordingly, there is still a need for an improved radio communication which ensures a maximum data rate irrespective of any disturbances.

The invention provides a radio node for radio communication which comprises at least a first radio with a first frequency range and a second radio with a second frequency range. The frequency ranges differ from each other. Particularly, the frequency ranges differ. The radio node comprises at least a first radio sensing module configured to sense radio signals within the first frequency range and a second radio sensing module configured to sense radio signals within the second frequency range. The radio node comprises a common spectrum management module that is configured to interact with the first radio sensing module and the second radio sensing module so as to obtain sensing data from the first radio sensing module and the second radio sensing module. The common spectrum management module is configured to process the sensing data obtained and to identify at least one abnormality within the sensing data. The common spectrum management module is configured to control the first radio, in case of an abnormality identified, to transmit an information message within the first frequency range, which comprises information about the abnormality identified in the first frequency range and/or the second frequency range.

Moreover, the invention provides a method of exchanging information about abnormalities in a frequency spectrum, wherein the method comprises the steps of:
- Providing a radio system that comprises a first radio node and a second radio node, wherein the first radio node has at least a first radio with a first frequency range and a second radio with a second frequency range, wherein the frequency ranges differ from each other, and wherein the first radio node comprises at least a common spectrum management module, a first radio sensing module configured to sense radio signals within the first frequency range and a second radio sensing module configured to sense radio signals within the second frequency range,
- Sensing radio signals within the first frequency range and/or the second frequency range by means of the first radio sensing module and the second radio sensing module, respectively, thereby generating sensing data,
- Forwarding the sensing data from the first radio sensing module and/or the second radio sensing module to the common spectrum management module,
- Processing the sensing data by means of the common spectrum management module,
- Identifying at least one abnormality within the sensing data by means of the common spectrum management module, and
- Controlling, by the common spectrum management module, the first radio, in case of an abnormality identified, to transmit an information message within the first frequency range, which comprises information about the abnormality identified in the first frequency range and/or the second frequency range.

The main idea is to provide a radio node that has two different radios as well as two different radio sensing modules configured to scan the radio frequency spectrum in order to detect abnormalities within the frequency spectrum, particularly in the frequency ranges associated with the different radios. Irrespective thereof which frequency range is disturbed, it is always the first radio that is used for transmitting the information message in order to inform other radio nodes about the abnormality. Actually, the first radio is associated with a frequency range ensuring a higher coverage range compared to the second radio.

Therefore, the information about the abnormality can be distributed within the radio system, particularly the radio group, while reaching radio nodes being located far away from the (initial/first) radio node, namely the radio node transmitting the information message. The idea behind the invention is to ensure that information about the respective sensing result, namely the abnormality identified, is forwarded to other participants (radio nodes) of the radio system, particularly within the same radio group, such that the other participants (radio nodes) get informed accordingly.

As indicated above, the respective radio node ensures that the information with regard to the first frequency range and/or the second frequency range can be distributed within the radio system due to the fact that the information message is transmitted within the first frequency range that is associated with the first radio having the higher coverage range compared to the second radio. Put differently, other radio nodes of the same radio system, particularly the same radio group, are informed via the first frequency range, namely by means of the first radio, with regard to an abnormality identified in the first frequency range and/or the second frequency range.

The information message is a broadcast message since the (initial) radio node broadcasts the information about the at least one abnormality within a radio network used by the radio nodes, namely within the radio system. Actually, the information message may be based on a acknowledgement-based broadcast protocol.

The first radio may be capable of using a very high frequency ("VHF"), for instance 30 to 300 MHz, whereas the second radio is capable of using a ultra-high frequency ("UHF"), namely 0.3 to 3 GHz.

The different radio sensing modules are configured to perform a narrowband sensing as well as a wideband sensing.

Further, the invention provides a radio system for radio communication. The radio system comprises a first radio node as described above and a second radio node. The second radio node is configured to receive the information message transmitted by the first radio node. The second radio node is configured to derive the information about the abnormality identified from the information message received. The second radio node is configured to transmit a feedback message to the first radio node. The first radio node is configured to receive the feedback message from the second radio node and to derive information from the feedback message. The information derived from the feedback message is forwarded to the common spectrum management module. Particularly, the common spectrum management module is configured to control the first radio to transmit an adaption message within the first frequency range, which causes the second radio node to adapt frequencies within a frequency hopset.

At least one other radio node, namely the second radio node, may confirm the abnormality identified in the respective frequency range and report it back to the first radio node, also called initial radio node, namely the radio node that has sent the information message. The confirmation and reporting is done by means of the feedback message. Alternatively, the least one other radio node, namely the second radio node, may perform the scan in order to obtain sensing data that is forwarded, particularly over-the-air, to the initial radio node for further analysis, namely by means of the feedback message. The initial radio node may process the scanning results obtained from the at least one other radio node in order to verify/confirm whether the frequency range is disturbed. Hence, raw sensing data may be forwarded over-the-air from the second radio node to the first radio node by means of the feedback message.

Once the abnormality/disturbance has been confirmed, a frequency band within the respective frequency range may be omitted due to the abnormality identified.

The first radio and the second radio both have a control plane module and a data plane module. The data plane module is used for processing, transmitting and receiving the radio signals, e.g. package transport and quality of service. The control plane module however is used for controlling waveform and network (parameters) during operation.

The common spectrum management module is a single instance for deciding whether an abnormality is present in the radio frequency spectrum, namely in the first frequency range and/or the second frequency range.

An aspect provides that the information about the identified abnormality comprises at least one disturbed frequency. Thus, the radio node informs about the frequency that shall not be used anymore, as a respective abnormality has been identified for the respective frequency. Particularly, the information transmitted corresponds to a frequency band, namely the frequency band comprising the disturbed frequency. The information about the frequency (band) may be used by the at least one other node for scanning the frequency range with respect to the frequency (band).

Another aspect provides that, in case the abnormality was identified in the first frequency range, the information message is transmitted at a later point of time and/or within a frequency band of the first frequency range, which differs from the frequency band in which the abnormality was identified. This ensures that the information message can be transmitted and received properly even though an abnormality was identified within the first frequency range. The proper information exchange can be ensured by using a different time slot or rather a different frequency band within the first frequency range, namely a frequency band that does not comprise the at least one disturbed frequency associated with the identified abnormality. Hence, even though the abnormality was identified in the first frequency range, the information message is transmitted by means of the first radio within the first frequency range due to the higher radio coverage of the first radio compared to the second radio.

Moreover, only one frequency band of the first frequency range corresponds to an operational channel and a feedback channel simultaneously whereas other frequency bands correspond to operational channels solely. Therefore, only one channel is used for receiving a feedback, whereas all other frequency bands are only used for operational purposes. Thus, the data rate for the radio communication can be maximized accordingly. The feedback is provided by at least one other radio node that communicates with the (initial) radio node, particularly in response to the information message transmitted by the (initial) radio node. In other words, the response to the information message relates to the feedback.

The first radio sensing module and the second radio sensing module may be configured to forward the sensing data to the common spectrum management module in a periodic manner. Particularly, the sensing data is forwarded each 100 ms. This ensures that the common spectrum management module is continuously informed about any disturbances/abnormalities within the respective frequency range. Thus, the common spectrum management module is enabled to directly react on any abnormality identified in order to ensure proper operation of the entire radio system, namely radio communication with maximized data rate.

The common spectrum management module may be configured to identify abnormalities in the sensing data only for predefined hopset frequencies used by the first radio and/or the second radio. The radio node, particularly the radio nodes of the entire radio system or rather within a radio group, may use predefined hopset frequencies for radio communication. Since these frequencies are used for radio communication, it is sufficient that the common spectrum management module only identifies abnormalities within frequencies or rather frequency bands associated with these predefined hopset frequencies, as only those abnormalities would disturb the radio communication during operation. Therefore, the computational power can be reduced.

Another aspect provides that the first radio is configured to receive an information message and/or a feedback message from another radio node. The first radio is configured to forward the information comprised in the information message received and/or the feedback message received to the common spectrum management module. Thus, the first radio is also used to receive a feedback from the other radio node within the radio system, namely the feedback message. The feedback message may comprise sensing data gathered by a radio sensing module of the another radio node, namely raw sensing data, and/or processed data, namely analysis date obtained by the another radio node. In fact, the another radio node may internally analyze the sensing data in order to confirm/acknowledge the abnormality identified by the (initial) radio node. Consequently, the feedback message may relate to an acknowledgement message.

The information message may relate to an initial information about an abnormality identified within the radio frequency spectrum, which was identified by the another radio node. Hence, each radio node within the radio system may initiate the process indicated above.

The feedback message however relates to a response from the other radio node to the initial information message sent by the radio node itself, which corresponds to the respective feedback.

The common spectrum management module may be configured to control the first radio to transmit an adaption message within the first frequency range, which causes another radio node to adapt frequencies within a frequency hopset. Particularly, the common spectrum management module is configured to control the first radio to transmit the adaption message after receiving a feedback message from another radio node. The adaption message is used to adapt the frequency used for radio communication. Thus, the radio node which initially sends the information message is also enabled to adapt the frequency used for radio communication within the radio system, particularly the radio group, by communicating this adaption to the other radio nodes within the radio system. Particularly, this adaption is only done in case the radio node that initially sends the information message gets the feedback from at least one other radio node of the radio system according to which the abnormality identified is confirmed, e.g. after receiving the feedback message from the other radio node. Hence, the adaption message is transmitted over-the-air (OTA).

The adaption message may comprise information about adapting the frequency within the first frequency range and/or within the second frequency range, which depends on the abnormality identified, namely in which frequency range the abnormality was identified. Particularly, the adaption message may encompass the instruction to remove the frequency (band) identified and acknowledged as having at least one abnormality.

In addition, the adaption message may comprise a time information when the adaption shall take place. This ensures a continuous communication within the radio network at maximum data rate since all radio nodes adapt their frequencies at the same time.

A further aspect provides that the common spectrum management module is configured to control the first radio and/or the second radio to adapt frequencies within a frequency hopset. In addition to the adaption message that is forwarded to other radio nodes within the radio system, particularly the same radio group of the radio system, the radio node itself also adapts its first radio and/or its second radio accordingly. This ensures that the same frequencies are used for radio communication. In fact, the common spectrum management module is enabled to control a control plane module of the respective radio, thereby adapting the frequencies used for radio communication.

Generally, a dynamic adaption of the frequency is ensued. The dynamic adaption of the frequency for radio communication provides a cognitive and dynamic radio communication since frequencies can be adapted dynamically during an ongoing application scenario. This ensures to actively react on changing circumstances that might have a negative impact on the radio communication. In other words, a dynamic spectrum management (DSM) is ensured, as the frequencies used for radio communication are dynamically adapted if necessary.

The dynamic spectrum management, namely the dynamic adaption of the frequency used for radio communication, e.g. the frequency spectrum scanning and identification of abnormalities, may relate to an operation mode that can be switched on and off.

The radio node may comprise a housing that encompasses the first radio, the second radio, the first radio sensing module, the second radio sensing module and a common spectrum management module. Hence, a single device may be established that encompasses the respective components. The radio node may relate to a handheld radio or rather a mobile radio that can be used in a field.

The first radio sensing module and the second radio sensing module may be connected with the common spectrum management module in a wired manner. The respective communication or exchange of information is done by means of wires or electrical lines.

The common spectrum management module may be connected with the first radio and the second radio in a wired manner. Again, the communication or rather exchange of information between the common spectrum management module and the respective radios may be established by means of wires or electrical lines.

Hence, the sensing data is forwarded to the common spectrum management module internally in the respective radio node. The gathering and processing of the sensing data is done locally within the radio node, namely without occupying capacities of the over-the-air radio communication.

An aspect provides that each radio node in the radio system is equal with regard to a hierarchy of the radio system. Particularly, this applies for radio nodes within a similar radio group provided that the radio system comprises several different radio groups. However, the radio system may also comprise a single radio group such that the radio system and the radio group are similar. In any case, each radio node of the radio system is equal with regard to a hierarchy of the radio system. Consequently, each of the radio nodes may initiate the dynamic frequency adaption in case an abnormality was detected during the scanning.

Consequently, a failure of a component of the radio system, e.g. a radio node, does not cause a total failure sine each of the radio nodes may initiate the process as mentioned above. In contrast thereto, a centralized system having one specific component for initiating the process would be more failure-prone with respect to a total failure, namely in case of a failure of the specific component.

Another aspect provides that the radio system comprises a remote dynamic spectrum management device configured to directly communicate with the radio nodes and/or with a lead radio that communicates with the radio nodes. The remote dynamic spectrum management device is configured to receive a disturbance message indicating disturbance of at least one frequency of a duration exceeding a time threshold. The remote-dynamic spectrum management device is configured to forward new operation settings in response to the disturbance message, e.g. to the lead radio or rather to at least one of the radio node(s) or even broadcasting the net operation settings to all radio nodes. Thus, a separately formed remote dynamic spectrum management device may directly communicate with the radio nodes of the radio system, particularly all radio nodes of a certain radio group. Put differently, the remote dynamic spectrum management device may directly communicate with the radio nodes such that broadcast messages are transmitted by the remote dynamic spectrum management device.

Particularly, the lead radio has a higher hierarchy level compared to the radio nodes. As discussed above, the remote dynamic spectrum management device may interact with the lead radio which in turn communicates with the radio nodes. For this reason, the lead radio has a higher hierarchy level compared to the radio nodes. Each radio group comprises at least one lead radio which communicates with all radio nodes of the same radio group.

The separately formed remote dynamic spectrum management device may be used to control a radio communication of several radio groups simultaneously, namely in a global manner, in order to ensure that the radio nodes of the several radio groups do not interfere with each other with regard to the radio frequencies used for radio communication. The centralized remote dynamic spectrum management device ensures that several radio groups can be operated simultaneously in the same area while still ensuring the dynamic adaption of the frequencies used. In fact, the centralized remote dynamic spectrum management device provides a frame for each radio group, namely a set of frequencies to be used for operation, wherein the radio nodes of the radio group may automatically and independently adapt the frequencies used for operation within the frame. Only in case the set of frequencies to be used is not sufficient anymore, the centralized remote dynamic spectrum management device interacts with the radio group in order to provide new operation settings, e.g. a new or adapted set of frequencies to be used for operation.

An aspect provides that the second radio node receives and processes the information message, wherein the second radio node transmits a feedback message to the first radio node. The first radio node receives the feedback message from the second radio node and derives information from the feedback message. The information derived from the feedback message is forwarded to the common spectrum management module. The common spectrum management module controls the first radio to transmit an adaption message within the first frequency range which causes the second radio node to adapt a frequency within a frequency hopset. As discussed above, the feedback message may comprise raw sensing data that is analyzed by the (initial/first) radio node or rather analysis data provided by the second radio node that already analyzes the sensing data gathered by its own so as to only forward the analysis result to the (initial/first) radio node.

In general, an energy value is determined for the respective frequency (band) scanned by means of the first radio sensing module and/or the second radio sensing module. The respective energy value is compared with an expected energy value. In case a deviation is detected that exceeds a threshold value, e.g. a threshold value of 10 dB, an abnormality is identified and, therefore, the respective frequency (band) is indicated as having an abnormality. The corresponding information may be distributed among the radio system, particularly the radio group.

Accordingly, the information forwarded to the (initial/first) radio node by means of the feedback message may be an energy value of the respective frequency (band) indicated by the (initial/first) radio node in the information message.

In case several information messages are transmitted by different radio nodes, only the information received first is processed further, whereas the later one(s) are discarded, e.g. by the radio nodes receiving the information message(s).

Generally, the over-the-air radio communication is only used for control purposes in case of an abnormality was detected locally. Accordingly, an over-the-air load that is caused by controlling the radio communication, namely the frequency to be used for operation, is reduced significantly.

Moreover, the radio system is enabled to solve problems internally/locally by means of the common spectrum management module that applies a Distributed Common Spectrum Management (DCSM) or rather a Cognitive Radio Dynamic Spectrum Management.

The foregoing aspects and many of the attendant advantages of the claimed subject matter will become more readily appreciated as the same become better understood by reference to the following detailed description, when taken in conjunction with the accompanying drawings, wherein:
- Figure 1 shows a schematic overview of a radio node according to the invention,
- Figure 2 shows the radio node of Figure 1 in a sensing mode,
- Figures 3a to 3c shows a schematic overview of a radio system according to the invention when transmitting an information message, transmitting a feedback message and transmitting an adaption message in a first scenario in which an abnormality was detected in a second frequency range (UHF),
- Figures 4a to 4c shows a schematic overview of a radio system according to the invention when transmitting an information message, transmitting a feedback message and transmitting an adaption message in a second scenario in which an abnormality was detected in a first frequency range (VHF),
- Figure 5 shows a schematic overview of a radio system according to the invention, which comprises participants in different hierarchy levels.

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the claimed subject matter to the precise forms disclosed.

For the purposes of the present disclosure, the phrase "at least one of A, B, and C", for example, means (A), (B), (C), (A and B), (A and C), (B and C), or (A, B, and C), including all further possible permutations when more than three elements are listed. In other words, the term "at least one of A and B" generally means "A and/or B", namely "A" alone, "B" alone or "A and B".

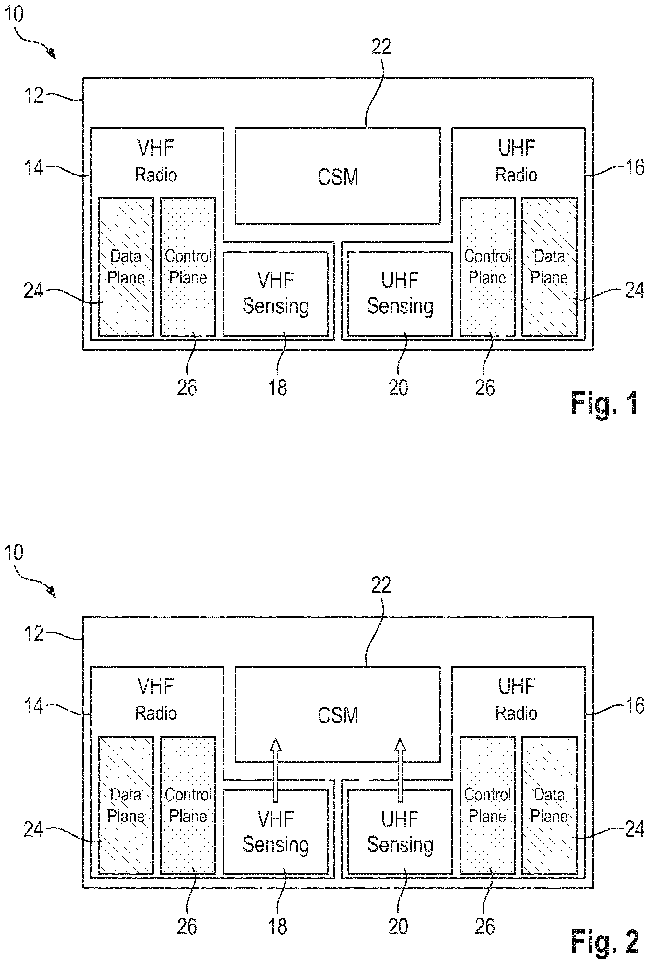

In Figure 1, a radio node 10 for radio communication is shown, which comprises a housing 12 that encompasses a first radio 14, a second radio 16, a first radio sensing module 18 as well as a second radio sensing module 20.

The first radio 14 as well as the first radio sensing module 18 both are configured to operate in a first frequency range, particularly a very high frequency ("VHF") range, namely 30 to 300 MHz. This means that the first radio 14 is enabled to transmit and receive radio signals within the first frequency range, whereas the first radio sensing module 18 is configured to scan the radio frequency spectrum in order to sense radio signals within the first frequency range.

The second radio 16 as well as the second radio sensing module 20 both are configured to operate in a second frequency range, particularly a ultra-high frequency ("UHF") range, namely 0.3 to 3 GHz. This means that the second radio 16 is enabled to transmit and receive radio signals within the second frequency range, whereas the second radio sensing module 20 is configured to scan the radio frequency spectrum in order to sense radio signals within the second frequency range.

In general, the first frequency range and the second frequency range differ from each other such that the first radio 14 has a higher coverage range compared to the second radio 16.

In fact, the first radio 14 is associated with the VHF range, whereas the second radio 16 is associated with the UHF range.

In addition, the radio node 10 comprises a common spectrum management module 22 that is configured to interact with the radio sensing modules 18, 20 as well as the radios 14, 16. Particularly, the common spectrum management module 22 is capable of obtaining sensing data from the first radio sensing module 18 and sensing data from the second radio sensing module 20, respectively. In fact, the first radio sensing module 18 and the second radio sensing module 20 are connected with the common spectrum management module 22 in a wired manner. Further, the common spectrum management module 22 is also connected with the first radio 14 and the second radio 16 in a wired manner.

The common spectrum management module 22 is configured to process the sensing data obtained and to identify at least one abnormality within the sensing data, for instance a frequency disturbed within a certain frequency band of the first frequency range and/or the second frequency range. Preferably, only frequencies of a pre-defined frequency hopset are checked with respect to abnormalities rather than frequencies not used for radio communication.

For instance, the common spectrum management module 22 is configured to determine an energy value for a respective frequency (band) in the sensing data obtained. The respective energy value determined is compared with an expected energy value. In case a deviation is detected that exceeds a threshold value, e.g. a threshold value of 10 dB, an abnormality is identified.

As further shown in Figure 1, the first radio 14 and the second radio 16 each have a data plane module 24 and a control plane module 26. The respective data plane module 24 is used for processing, transmitting and receiving the radio signals, e.g. package transport and quality of service. The control plane module 26 is used for controlling waveform and network (parameters) during operation.

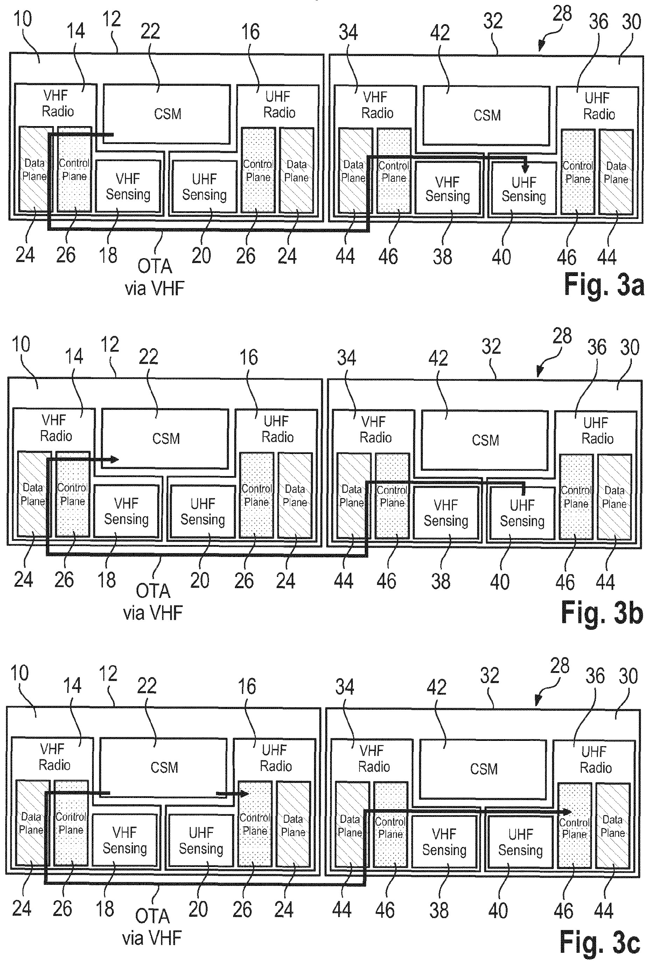

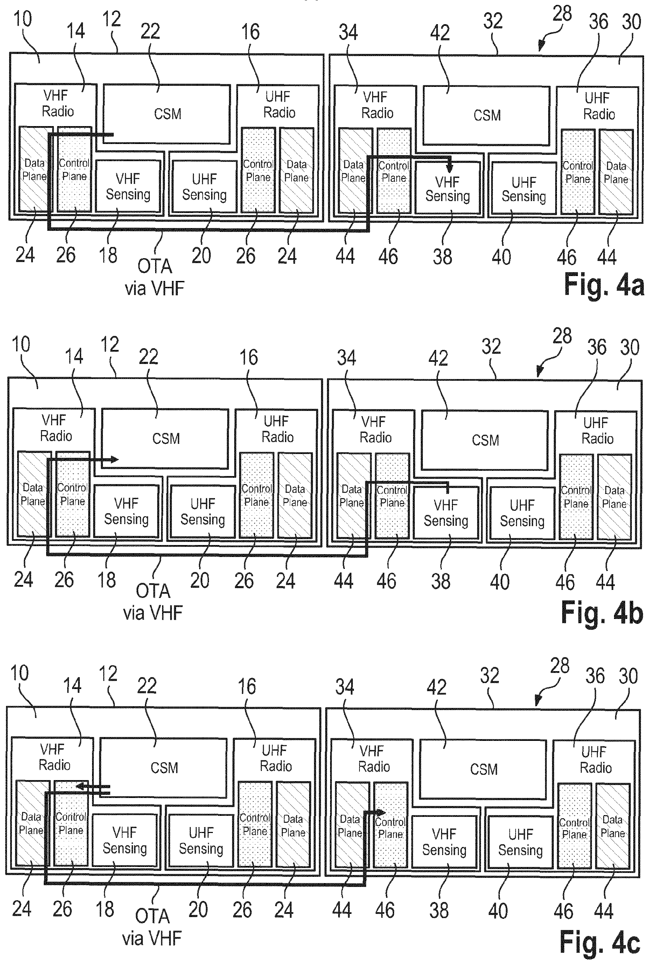

The respective operation of the radio node 10, particularly within a radio system 28 shown in Figures 3 and 4, will be described hereinafter in more detail with reference to Figures 2 to 4.

In a first step illustrated in Figure 2, the first radio sensing module 18 and/or the second radio sensing module 20 sense radio signals within the radio frequency spectrum. In the shown embodiment, the first radio sensing module 18 senses the first frequency range with regard to radio signals and the second radio sensing module 20 senses the radio signals within the second frequency range simultaneously. This might also be called a wideband scanning and a narrowband scanning.

By sensing the radio frequency spectrum, the radio sensing modules 18, 20 generate sensing data that is forwarded from the first radio sensing module 18 and/or the second radio sensing module 20 to the common spectrum management module 22 for further processing. This is shown in Figure 2 by means of the arrows illustrating the data flow from the respective radio sensing modules 18, 20 to the common spectrum management module 22.

The common spectrum management module 22 processes the sensing data received in order to identify at least one abnormality within the sensing data. This abnormality may relate to an abnormality within the first frequency range and/or the second frequency range. As indicated above, the common spectrum management module 22 may determine an energy value for at least one frequency (band) in the sensing data and compares the energy value with an expected energy value in order to detect if a deviation exceeds threshold value, e.g. a threshold value of 10 dB, which is indicative of an abnormality in the frequency (band).

In Figures 3a to 3c, a first scenario is illustrated in which an abnormality was identified in the second frequency range, whereas Figures 4a to 4c illustrate a second scenario in which an abnormality was identified in the first frequency range. Hereinafter, reference is made to the first scenario according to Figures 3a to 3c.

Once the common spectrum management module 22 has identified an abnormality within the sensing data (here within the second frequency range associated with the second radio 16), the common spectrum management module 22 controls the first radio 14, particularly its data plane module 24, to transmit an information message within the first frequency range, namely the VHF range. Accordingly, the information message is transmitted over-the-air via a VHF radio communication network.

The information message comprises information about the abnormality identified, e.g. a frequency (band) comprising the abnormality.

The first radio 14 transmits the information message to at least one other radio node 30 having a housing 32, as illustrated in Figures 3A.

As indicated above, the respective information message is transmitted over-the-air by using the radio communication network associated with the first frequency range, namely the VHF radio network. In fact, the first radio 14 broadcasts the information message to all radio nodes within the radio system 10.

In the shown embodiment, the other radio node 30 also comprises a first radio 34, a second radio 36, a first radio sensing module 38, a second radio sensing module 40 as well as a common spectrum management module 42. Similar to the first/initial radio 10, the radios 14, 16 of the second/other radio node 30 also each comprise a data plane module 44 and a control plane module 46.

Therefore, the first radio 34 of the second radio node 30 receives the information message transmitted by the first radio 14 of the initial/first radio node 10. In fact, the information message received is processed by the data plane module 34 of the first radio 34 of the second radio node 30. The data/information encompassed in the information message is used to control the second radio sensing module 40 of the second radio node 30 to scan the radio frequency spectrum within the second radio frequency range for the abnormality detected by the initial radio node 10.

The second radio sensing module 14 senses radio signals within the second frequency range, thereby generating sensing data with regard to the second frequency range.

As shown in Figure 3b, the second/other radio node 30 transmits a feedback message to the first/initial radio 10 over-the-air via the radio communication network associated with the first frequency range, namely the VHF range. Hence, the first radio 34 of the second/other radio node 30, particularly the data plane module 44, is used for transmitting the feedback message to the first/initial radio node 10. The first/initial radio node 10 receives the feedback message by means of its first radio 14.

The feedback message received by the first radio 14 of the first radio node 10 is processed by the data plane module 24 of the first radio 14 of the first radio node 10, wherein data/information obtained is forwarded to the common spectrum management module 22 of the first radio node 10 in order to process the information of the feedback message. Particularly, the sensing data gathered by the second radio sensing module 40 of the second radio node 30, which is encompassed in the feedback message, is processed by the common spectrum management module 22 of the first radio node 10.

Hence, the common spectrum management module 22 of the first radio node 10 is enabled to verify whether the initially identified abnormality is confirmed by the sensing data obtained from the second radio node 30.

Alternatively, the feedback message received from the second node 30 already comprises an analysis, e.g. whether the abnormality is present in the sensing data gathered by the second radio node 30. Accordingly, the information encompassed in the feedback message may concern a confirmation that the abnormality has also been identified via the second radio node 30 within the second frequency range. Put differently, the second radio node 30 itself is enabled to identify the abnormality. Thus, processing is partly done by the second radio node 30.

Irrespective thereof which entity performs the analysis of the sensing data gathered by the second radio sensing module 40 of the second radio node 30, the common spectrum management module 22 of the first radio node 10 obtains the information/verification whether the abnormality initially identified is confirmed.

In case of a confirmation, the common spectrum management module 22 of the first radio node 10 controls the first radio 14, particularly the data plane module 24, to transmit an adaption message over-the-air ("OTA") within the first frequency range, namely via the radio communication network associated with the first frequency range ("VHF"), as illustrated in Figure 3C. The adaption message may be broadcasted.

The adaption message is received via the first radio 34 of the second radio node 30 and processed internally, e.g. by means of the data plane module 44 of the first radio 34 of the second radio node 30, so as to adapt a control plane module of the second radio 36 of the second radio node 30 in order to adapt the frequency used for radio communication.

For instance, the adaption message may comprise instructions to delete a frequency from the frequency hopset. Hence, the frequency (band) having the abnormality is not used anymore.

Despite the frequency (band), e.g. information about the frequency (band), the adaption message may also comprise a time information that defines when the adaption shall take place.

Accordingly, the first radio node 10 is enabled to control the radio settings of the second radio node 30.

Simultaneously to the generation of the adaption message, the common spectrum management module 22 of the first radio 10 also controls the second radio 16 of the first radio node 10, particularly the respective control plane 26, to adapt the frequency within the frequency hopset. In fact, the same adaption is done. This ensures that all radio nodes 10, 30 of the radio system 28 obtain the same information about the frequencies to be used for radio communication, namely within the second frequency range, in order to avoid disturbances due to the abnormality identified.

In Figures 4a to 4c, the same operation is illustrated for the case that the sensing data initially obtained by means of the first radio node 10 identifies an abnormality within the first frequency range, namely the frequency range used as feedback channel.

Accordingly, the first radio node 10 transmits the information message via the first frequency range, particularly the radio communication network associated with the first frequency range ("VHF"), which is processed by the second radio node 30 such that the first radio sensing module 38 is controlled to sense the radio frequency spectrum within the first frequency range for any abnormalities. This is illustrated in Figure 4a.

Similar to the first scenario and as shown in Figure 4b, the second radio node 30 transmits a feedback message via the first radio 34 of the second radio node 30 to the first radio 14 of the first radio node 10, namely via the VHF radio network. The feedback signal comprises (information about) the sensing data gathered by the first radio sensing module 38 of the second radio node 30.

The first radio 14 of the first radio node 10 receives the feedback message that is processed by the data plane module 24 of the first radio 14 of the first radio node 10, wherein data derived from the feedback message is forwarded internally to the common spectrum management module 22 of the first radio node 10, e.g. the (raw) sensing data.

The common spectrum management module 22 of the first radio node 10 processes the data received in order to verify whether the abnormality detected initially is confirmed by the sensing data gathered by means of the second radio node 30.

In case of an acknowledgement, the common spectrum management module 22 controls the control plane module 26 of the first radio 14 and also controls the data plane module 24 of the first radio 14 to transmit an adaption message to be received by the second radio node 30 for adapting the frequencies to be used, as shown in Figure 4c.

Similar to the first scenario, the adaption message is transmitted via the first radio 14 of the first radio node 10 and received by the first radio 34 of the second radio node 30. The adaption message received is processed by the data plane module 44 of the first radio 34 of the second radio node 30. In the respective scenario, the adaption message comprises instructions to control the control plane module 46 of the first radio 34 of the second radio node 30 in order to adapt the frequencies to be used for radio communication by the first radio 34, namely the frequencies of the first frequency range.

Accordingly, the first frequency range ("VHF"), namely the radio communication network associated with the first frequency range, is always used by the radio nodes 10, 30 irrespective thereof whether the abnormality has been detected in the first frequency range (Figures 4a to 4c) or in the second frequency range (Figures 3a to 3c). Therefore, only one frequency band of the first frequency range corresponds to an operational channel and a feedback channel simultaneously, whereas the other frequency bands correspond to operational channels solely. The data rate for radio communication can be maximized accordingly.

In case the abnormality has been detected in the first frequency range, the information message is transmitted in another frequency band of the first frequency range, which differs from the one having the abnormality. Alternatively or additionally, the information message is transmitted later, thereby ensuring that the communication is not disturbed.

Generally, the second/other radio node 30 may forward the sensing data by means of the feedback message to the first/initial radio node 10 such that no processing of the sensing data is done by means of the second/other radio node 30, particularly its common spectrum management module 42. Consequently, all processing is done by the first/initial radio node 10 that has initiated the process by broadcasting the information message.

Moreover, each radio node 10, 30 within the radio system 28 is enabled to initiate the process, namely the frequency adaption, as all radio nodes 10, 30 are equal with regard to their hierarchy level. Moreover, all radio nodes 10, 30 have the same components which enable the respective radio nodes 10, 30 to initiate the process of frequency adaption.

The respective process may relate to an operation mode that can be activated, namely switched on/off. Once activated, the radio sensing modules 18, 20, 38, 40 of the corresponding radio node 10, 30 forward the sensing data to the respective common spectrum management module 22, 42 in a periodic manner.

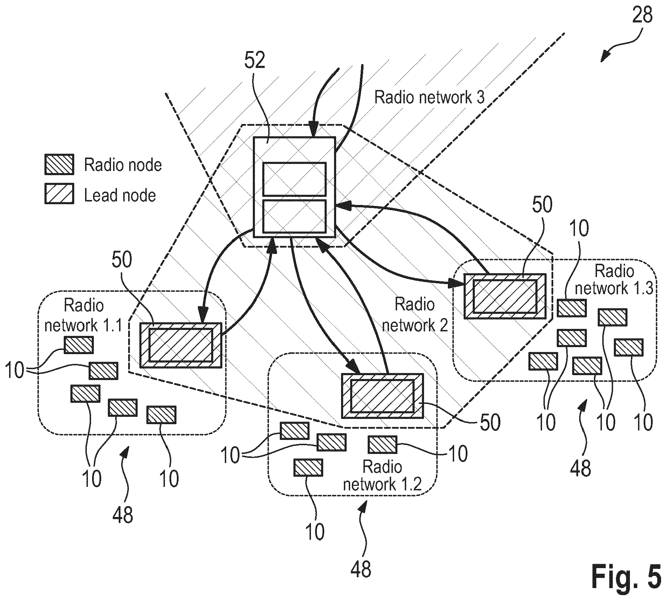

In Figure 5, another radio system 28 is shown that comprises several radio groups 48 that each comprise several radio nodes 10 and one lead radio 50 that has a higher hierarchy level compared to the radio nodes 10.

The several radio nodes 10 and the lead radio 50 per radio group 48 communicate with each other in a respective radio network that is labelled as "radio network 1.1", "radio network 1.2" and "radio network 1.3" in Figure 5. Hence, three different radio groups 48 are provided. Within each radio group 48, the radio nodes 10 may be operated as described with respect to Figures 2 to 4.

In addition, the radio system 28 shown in Figure 5 also comprises a remote dynamic spectrum management device 52 that is configured to directly communicate with the radio nodes 10 within the radio groups 48 and/or with the lead radio 50 that in turn communicates with the radio nodes 10. In the shown embodiment, the remote dynamic spectrum management device 52 communicates with the lead radio 50 of the respective radio group 48, wherein the communication is performed in a radio network different to the one of the radio group(s) 48, namely "radio network 2".

The remote dynamic spectrum management device 52 is configured to receive a disturbance message indicating a disturbance of at least one frequency for a duration exceeding a time threshold. Actually, the disturbance message may be transmitted by the lead radio 50 in case the radio nodes 10 are not able to solve problems obtained by abnormalities within the frequencies detected by means of the measures described with respect to Figures 2 to 4 beforehand. For instance, the pre-defined frequencies are (all) disturbed and no (pre-defined) frequency is available for replacing a disturbed frequency.

Once the remote dynamic spectrum management device 52 receives the disturbance message, the remote dynamic spectrum management device 52 determines new operation settings, e.g. frequencies, in response to the disturbance message for the respective radio group 48, which is forwarded to the lead radio 50 of the respective radio group 48.

The lead radio 50 distributes the new operation settings within the radio group 48 such that all radio nodes 10 receive the new operation settings.

Generally, the remote dynamic spectrum management device 52 is enabled to take care of several radio networks simultaneously, thereby ensuring that no disturbances among different radio groups 48 take place. Consequently, a global dynamic frequency adaption may be done additionally, particularly in case a local dynamic frequency adaption is not possible anymore. Hence, a two-step approach is provided.

Certain embodiments disclosed herein, particularly the respective module(s) and/or unit(s), utilize circuitry (e.g., one or more circuits) in order to implement standards, protocols, methodologies or technologies disclosed herein, operably couple two or more components, generate information, process information, analyze information, generate signals, encode/decode signals, convert signals, transmit and/or receive signals, control other devices, etc. Circuitry of any type can be used.

In an embodiment, circuitry includes, among other things, one or more computing devices such as a processor (e.g., a microprocessor), a central processing unit (CPU), a digital signal processor (DSP), an application-specific integrated circuit (ASIC), a field-programmable gate array (FPGA), a system on a chip (SoC), or the like, or any combinations thereof, and can include discrete digital or analog circuit elements or electronics, or combinations thereof. In an embodiment, circuitry includes hardware circuit implementations (e.g., implementations in analog circuitry, implementations in digital circuitry, and the like, and combinations thereof).

In an embodiment, circuitry includes combinations of circuits and computer program products having software or firmware instructions stored on one or more computer readable memories that work together to cause a device to perform one or more protocols, methodologies or technologies described herein. In an embodiment, circuitry includes circuits, such as, for example, microprocessors or portions of microprocessor, that require software, firmware, and the like for operation. In an embodiment, circuitry includes one or more processors or portions thereof and accompanying software, firmware, hardware, and the like.

The present application may reference quantities and numbers. Unless specifically stated, such quantities and numbers are not to be considered restrictive, but exemplary of the possible quantities or numbers associated with the present application. Also in this regard, the present application may use the term "plurality" to reference a quantity or number. In this regard, the term "plurality" is meant to be any number that is more than one, for example, two, three, four, five, etc. The terms "about", "approximately", "near" etc., mean plus or minus 5% of the stated value.

## Claims

1. A radio node (10, 30) for radio communication, wherein the radio node (10, 30) comprises at least a first radio (14, 34) with a first frequency range and a second radio (16, 36) with a second frequency range, wherein the frequency ranges differ from each other, wherein the radio node (10, 30) comprises at least a first radio sensing module (18, 38) configured to sense radio signals within the first frequency range and a second radio sensing module (20, 40) configured to sense radio signals within the second frequency range, wherein the radio node (10, 30) comprises a common spectrum management module (22, 42) that is configured to interact with the first radio sensing module (18, 38) and the second radio sensing module (20, 40) so as to obtain sensing data from the first radio sensing module (18, 38) and the second radio sensing module (20, 40), wherein the common spectrum management module (22, 42) is configured to process the sensing data obtained and to identify at least one abnormality within the sensing data, and wherein the common spectrum management module (22, 42) is configured to control the first radio (14, 34), in case of an abnormality identified, to transmit an information message within the first frequency range, which comprises information about the abnormality identified in the first frequency range and/or the second frequency range.

2. The radio node (10, 30) according to claim 1, wherein the information about the identified abnormality comprises at least one disturbed frequency.

3. The radio node (10, 30) according to claim 1 or 2, wherein, in case the abnormality was identified in the first frequency range, the information message is transmitted at a later point of time and/or within a frequency band of the first frequency range, which differs from the frequency band in which the abnormality was identified.

4. The radio node (10, 30) according to any one of the preceding claims, wherein only one frequency band of the first frequency range corresponds to an operational channel and a feedback channel simultaneously, whereas other frequency bands correspond to operational channels solely.

5. The radio node (10, 30) according to any one of the preceding claims, wherein the first radio sensing module (18, 38) and the second radio sensing module (20, 40) are configured to forward the sensing data to the common spectrum management module (22, 42) in a periodic manner.

6. The radio node (10, 30) according to any one of the preceding claims, wherein the common spectrum management module (22, 42) is configured to identify abnormalities in the sensing data only for predefined hopset frequencies used by the first radio (14, 34) and/or the second radio (16, 36).

7. The radio node (10, 30) according to any one of the preceding claims, wherein the first radio (14, 34) is configured to receive an information message and/or a feedback message from another radio node (10, 30), wherein the first radio (14, 34) is configured to forward the information comprised in the information message and/or the feedback message received to the common spectrum management module (22, 42).

8. The radio node (10, 30) according to any one of the preceding claims, wherein the common spectrum management module (22, 42) is configured to control the first radio (14, 34) to transmit an adaption message within the first frequency range, which causes another radio node to adapt frequencies within a frequency hopset, in particular wherein the common spectrum management module (22, 42) is configured to control the first radio (14, 34) to transmit the adaption message after receiving a feedback message from another radio node (10, 30).

9. The radio node (10, 30) according to any one of the preceding claims, wherein the common spectrum management module (22, 42) is configured to control the first radio (14, 34) and/or the second radio (16, 36) to adapt frequencies within a frequency hopset.

10. The radio node (10, 30) according to any one of the preceding claims, wherein the radio node (10, 30) comprises a housing (12, 32) that encompasses the first radio (14, 34), the second radio (16, 36), the first radio sensing module (18, 38), the second radio sensing module (20, 40) and the common spectrum management module (22, 42), and/or wherein the first radio sensing module (18, 38) and the second radio sensing module (20, 40) are connected with the common spectrum management module (22, 42) in a wired manner, and/or wherein the common spectrum management module (22, 42) is connected with the first radio (14, 34) and the second radio (16, 36) in a wired manner.

11. A radio system (28) for radio communication, wherein the radio system (28) comprises a first radio node(10) according to any one of the preceding claims and a second radio node (30), wherein the second radio node (30) is configured to receive the information message transmitted by the first radio node (10), wherein the second radio node (30) is configured to derive the information about the abnormality identified from the information message received, wherein the second radio node (30) is configured to transmit a feedback message to the first radio node (10), wherein the first radio node (10) is configured to receive the feedback message from the second radio node (30) and to derive information from the feedback message, wherein the information derived from the feedback message is forwarded to the common spectrum management module (22), in particular wherein the common spectrum management module (22) is configured to control the first radio (14) to transmit an adaption message within the first frequency range, which causes the second radio node (30) to adapt frequencies within a frequency hopset.

12. The radio system (28) according to claim 11, wherein each radio node (10, 30) in the radio system (28) is equal with regard to a hierarchy of the radio system (28).

13. The radio system (28) according to claim 11 or 12, wherein the radio system (28) comprises a remote dynamic spectrum management device (52) configured to directly communicate with the radio nodes (10) and/or with a lead radio (50) that communicates with the radio nodes (10), wherein the remote dynamic spectrum management device (52) is configured to receive a disturbance message indicating disturbance of at least one frequency for a duration exceeding a time threshold, and wherein the remote dynamic spectrum management device (52) is configured to forward new operation settings in response to the disturbance message, in particular wherein the lead radio (50) has a higher hierarchy level compared to the radio nodes (10).

14. A method of exchanging information about abnormalities in a frequency spectrum, wherein the method comprises the steps of:
- Providing a radio system (28) that comprises a first radio node (10) and a second radio node (30), wherein the first radio node (10) has at least a first radio (14) with a first frequency range and a second radio (16) with a second frequency range, wherein the frequency ranges differ from each other, and wherein the first radio node (10) comprises at least a common spectrum management module (22), a first radio sensing module (18) configured to sense radio signals within the first frequency range and a second radio sensing module (20) configured to sense radio signals within the second frequency range,
- Sensing radio signals within the first frequency range and/or the second frequency range by means of the first radio sensing module (18) and the second radio sensing module (20), respectively, thereby generating sensing data,
- Forwarding the sensing data from the first radio sensing module (18) and/or the second radio sensing module (20) to the common spectrum management module (22),
- Processing the sensing data by means of the common spectrum management module (22),
- Identifying at least one abnormality within the sensing data by means of the common spectrum management module (22), and
- Controlling, by the common spectrum management module (22), the first radio (14), in case of an abnormality identified, to transmit an information message within the first frequency range, which comprises information about the abnormality identified in the first frequency range and/or the second frequency range.

15. The method according to claim 14, wherein the second radio node (30) receives and processes the information message, wherein the second radio node (30) transmits a feedback message to the first radio node (10), wherein the first radio node (10) receives the feedback message from the second radio node (30) and derives information from the feedback message, wherein the information derived from the feedback message is forwarded to the common spectrum management module (22), and wherein the common spectrum management module (22) controls the first radio (14) to transmit an adaption message within the first frequency range, which causes the second radio node (30) to adapt frequencies within a frequency hopset.
